Europäisches Patentamt

European Patent Office

Office européen des brevets

(11) Veröffentlichungsnummer: **0 207 364**
B1

# EUROPÄISCHE PATENTSCHRIFT

(45) Veröffentlichungstag der Patentschrift:
24.05.89

(51) Int. Cl.⁴: **B 60 S 1/34,** B 60 S 1/52,
B 60 S 1/50

(21) Anmeldenummer: 86108277.4

(22) Anmeldetag: 18.06.86

(54) Scheibenwischeranlage.

(30) Priorität: 29.06.85 DE 3523441

(43) Veröffentlichungstag der Anmeldung:
07.01.87 Patentblatt 87/2

(45) Bekanntmachung des Hinweises auf die Patenterteilung:
24.05.89 Patentblatt 89/21

(84) Benannte Vertragsstaaten:
FR GB IT

(56) Entgegenhaltungen:
DE-A- 3 521 024
FR-A- 2 497 745
US-A- 2 609 561
US-A- 3 887 956

PATENT ABSTRACTS OF JAPAN, Band 7, Nr. 44
(M-195)[1189], 22. Februar 1983; & JP-A-57 194 140
(TOYO KOGYO K.K.) 29-11-1982

(73) Patentinhaber: SWF Auto-Electric GmbH, Stuttgarter
Strasse 119 Postfach 135, D-7120 Bietigheim-Bissingen
(DE)

(72) Erfinder: Bienert, Herbert, Ahornweg 15,
D-7122 Besigheim (DE)
Erfinder: Walther, Bernd, Birkenweg 20,
D-7120 Bietigheim-Bissingen (DE)

## Beschreibung

Die Erfindung bezieht sich auf eine Scheibenwischeranlage gemäß den Merkmalen des Oberbegriffs des Anspruchs 1 (siehe die DE-C-31 02 538).

Bei einer aus der DE-C-31 02 538 bekannten Scheibenwischeranlage dieser Art hat die Wischerwelle eine Bohrung als Waschflüssigkeitskanal und am wischarmseitigen Ende einen Kugelnippel, der mit einer entsprechend ausgebildeten Kugelpfanne an der am Wischarm schwenkbar angelenkten Abdeckkappe verrastbar ist. Die Düsen sitzen bei dieser Ausführung seitlich an der aus Kunststoff ausgebildeten Abdeckkappe. Vorteilhaft bei dieser Ausführung ist, daß der bisher übliche Wischarmaufbau im wesentlichen beibehalten werden kann. Insbesondere wird der Wischarm in üblicher Weise auf der Wischerwelle befestigt, wobei diese Verbindung zwischen Wischerwelle und Befestigungsteil durch die ebenfalls bekannte und übliche schwenkbare Abdeckkappe ausreichend geschützt ist. Nachteilig ist allerdings, daß eine flüssigkeitsdichte Verbindung zwischen dem Kugelnippel an der Wischerwelle und der entsprechenden Kugelpfanne an der Abdeckkappe wegen unvermeidlicher Toleranzen nicht immer gewährleistet werden kann. Auch ist die Herstellung dieser Abdeckkappe verhältnismäßig teuer, denn dazu muß eine völlig neue Spritzform hergestellt werden, weil diese Abdeckkappe ja auch Waschflüssigkeitskanäle aufweisen muß. Besonders nachteilig ist jedoch bei manchen Anwendungsfällen, daß die zu reinigende Scheibe nicht ausreichend mit der Waschflüssigkeit benetzt wird. Dies liegt daran, daß der Waschflüssigkeitsstrahl in einem verhältnismäßig flachen Winkel auf die Scheibe auftrifft, denn der Abstand zwischen dieser Scheibe und den Düsen ist verhältnismäßig klein.

Der Erfindung liegt daher die Aufgabe zugrunde eine Scheibenwischeranlage dieser Art so zu verbessern, daß die Scheibe ausreichend benetzt wird, wobei auch nach längerer Betriebszeit eine einwandfreie Funktion gewährleistet werden soll. Dabei sollen konstruktiv einfache Teile verwendet werden, die möglichst ohne größeren Aufwand aus handelsüblichen Teilen abgeleitet werden können.

Diese Aufgabe wird erfindungsgemäß mit den kennzeichnenden Merkmalen des Anspruchs 1 gelöst.

Der Erfindung liegt dabei die Überlegung zugrunde, daß eine wesentlich bessere Reinigungswirkung dann erzielt wird, wenn man den Abstand zwischen der Düse und der zu reinigenden Scheibe vergrößert. Um dies zu ermöglichen, ohne prinzipiell von dem bisher üblichen Aufbau derartiger Scheibenwischeranlagen abzuweichen, wird erfindungsgemäß vorgeschlagen, daß sich der Waschflüssigkeitskanal durch eine Bohrung in der Abdeckkappe hindurcherstrecken soll, so daß in der Betriebsstellung der Abdeckkappe die Düse auf der dem Befestigungsteil gegenüberliegenden Seite der Abdeckkappe angeordnet ist.

Aus der US-A-2 609 561 bzw. 3 230 564 ist zwar bereits eine Scheibenwischeranlage bekannt, bei der die Düse in größerem Abstand zur Scheibe als bei der Ausführung nach der DE-C-31 02 538 ist, doch handelt es sich dabei nicht um den heute üblichen Aufbau mit einem Wischarm mit einer schwenkbar am Befestigungsteil angelenkten Abdeckkappe, die die Verbindung zwischen Befestigungsteil und Wischerwelle abdeckt. Bei diesen Ausführungen ist vielmehr zu befürchten, daß seitlich des Waschflüssigkeitskanals Feuchtigkeit in den Bereich der Verbindung zwischen Befestigungsteil und Wischerwelle eintritt, was zu Korrosionen führen kann, so daß möglicherweise der Wischarm von der Wischerwelle nicht mehr abgenommen werden kann oder ein ausreichender Sitz nicht gewährleistet ist.

Bei einem Wischarm mit einer schwenkbaren Abdeckkappe ist nun zu berücksichtigen, daß sich der Rand der Bohrung beim Abklappen der Abdeckkappe auf einer Kreisbahn bewegt. Bei einem sich längs einer Geraden erstreckenden Waschflüssigkeitskanal, der weit über die Abdeckkappe hervorsteht, würden sich also Probleme beim Abklappen der Abdeckkappe ergeben und man müßte — um eine ausreichend freie Schwenkbewegung der Abdeckkappe zu gewährleisten — die Bohrung in der Abdeckkappe als Langloch ausbilden. Damit wäre aber die gewünschte Abdichtung der Verbindung zwischen Befestigungsteil und Wischerwelle nicht gewährleistet. Um dieses Problem zu lösen, wird daher gemäß einer besonders bevorzugten Weiterbildung der Erfindung die Bohrung in der Abdeckkappe größer ausgeführt als der Außendurchmesser des Waschflüssigkeitskanals, so daß die erforderliche Verschwenkmöglichkeit dieser Abdeckkappe gegeben ist. Der dann zwischen dem Rand der Bohrung in der Abdeckkappe und dem Waschflüssigkeitskanal gebildete Spalt wird nun durch eine Zusatzkappe abgeschlossen. Eine solche Ausführung bedeutet auf den ersten Blick einen erhöhten konstruktiven Aufwand. Bei genauer Betrachtung ergibt sich jedoch, daß eine solche Ausführung kostengünstig mit dem bisherigen Spritzwerkzeug hergestellt werden kann, da außer der Bohrung keine Änderungen erforderlich sind. Bei der Zusatzkappe handelt es sich um ein spritztechnisch sehr einfaches Teil, das ebenfalls kostengünstig hergestellt werden kann.

Theoretisch könnte man diese Zusatzkappe mit der Abdeckkappe verrasten, allerdings würde das einen erhöhten Demontageaufwand bedeuten, denn diese Zusatzkappe muß ja von der Abdeckkappe abgenommen sein, wenn die Abdeckkappe verschwenkt werden soll. Deshalb wird bevorzugt eine Ausführung eingesetzt, bei der diese Zusatzkappe ortsfest mittelbar oder unmittelbar an der Wischerwelle gehalten ist. Dabei wird die Zusatzkappe in Achsrichtung der Wischerwelle derart fixiert, daß sie auf der der Düse zugewandten Seite wenigstens annähernd bündig mit der Außenfläche der Abdeckwand der Abdeckkappe abschließt. Dies ist aus stilistischen Gründen sinnvoll, hat aber auch den technischen Vorteil, daß dann beim Abschwenken der Abdeckkappe wegen der geringen Materialstärke der Abdeckkappe kein Verklemmen zwischen der Zusatzkappe und der Abdeckkappe auftreten kann.

Damit auch nach längerer Betriebszeit keine Undichtigkeiten auftreten, wird die Abdeckkappe drehfest mit der Wischerwelle gekoppelt. Beim Wischvorgang dreht sich folglich die Zusatzkappe gleichsinnig mit der Abdeckkappe, so daß die aneinander anliegenden Flächen der Zusatzkappe und der Abdeckkappe nicht auf Reibung beansprucht werden, was zu Undichtigkeiten führen könnte.

Prinzipiell könnte man den Waschflüssigkeitskanal ebenfalls drehfest mit der Wischerwelle koppeln, insbesondere wäre also eine Lösung denkbar, bei der die Wischerwelle die Bohrung in der Abdeckkappe durchsetzt. Eine solche Lösung hat den Vorteil, daß der Waschflüssigkeitsstrahl immer in einem definierten Abstand vor dem Wischblatt auf die zu reinigende Scheibe auftrifft. Allerdings könnten dann Probleme hinsichtlich der Beanspruchung des Waschflüssigkeitsschlauches auftreten, der an die pendelnde Wischerwelle angeschlossen werden muß. Bei einem bevorzugten Ausführungsbeispiel der Erfindung ist der Waschflüssigkeitskanal ortsfest angeordnet. Dann ergibt sich jedoch eine Relativbewegung zwischen dem Rand der Bohrung in der Zusatzkappe und dem Waschflüssigkeitskanal, so daß man in diesem Bereich zweckmäßigerweise an der Zusatzkappe eine Dichtlippe ausbildet, die einerseits diese Relativbewegung zwischen Waschflüssigkeitskanal und Zusatzkappe zuläßt, andererseits aber auch eine einwandfreie Abdichtung bewerkstelligt.

Als Waschflüssigkeitskanal wird ein separates Kunststoffrohr verwendet, das ortsfest in einer Bohrung der Wischerwelle angeordnet ist und über die Stirnfläche der Wischerwelle hervorsteht. Auf dieses Ende des Rohres wird dann ein Düsenkörper mit der Düse aufgerastet, der sich auf der Stirnfläche der Wischerwelle abstützt. Auf der gegenüberliegenden Seite ist an dieses Rohr ein Bund angeformt, der das Ende der Wischerwelle passend umgreift. Folglich ist die Lage dieses Waschflüssigkeitskanales in Achsrichtung gesehen innerhalb der Wischerwelle eindeutig festgelegt, ohne daß zusätzliche Mittel erforderlich sind.

Die Erfindung und deren vorteilhafte Ausgestaltungen werden nachstehend anhand der in der Zeichnung dargestellten Ausführungsbeispiele näher erläutert. Es zeigen:

Fig. 1 einen Teilschnitt durch eine Scheibenwischeranlage im Bereich der Wischerwelle, wobei nur die für die Erfindung wesentlichen Teile dargestellt sind,

Fig. 2 eine Ansicht in Pfeilrichtung P und

Fig. 3 einen Teilschnitt durch ein zweites Ausführungsbeispiel.

Der nur angedeutete Wischarm hat in bekannter Weise ein Befestigungsteil 10 mit einer Gelenkstelle 11 für ein übliches Gelenkteil sowie eine schwenkbare Abdeckkappe 12. Dieses Befestigungsteil 10 ist in bekannter Weise an einer Wischerwelle 13 fixiert, die anschließend an einen konischen Abschnitt einen Gewindeabschnitt 14 für eine Befestigungsmutter 15 aufweist. Zwischen der Befestigungsmutter 15 und dem Befestigungsteil 10 liegt ein Sicherungsring 16.

Die Wischerwelle 13 wird von einer Bohrung 20 durchsetzt, in die ein Kunststoffrohr 21 als Waschflüssigkeitskanal eingesetzt ist. Dieses Kunststoffrohr 21 steht wischarmseitig über die Stirnfläche 22 der Wischerwelle hervor und hat dort einen Kugelnippel 23, auf den ein Düsenkörper 24 mit einer verstellbaren Düse 25 aufgerastet ist. Der Düsenkörper 24 stützt sich auf der Stirnfläche 22 der Wischerwelle 13 in Achsrichtung ab. Verdrehsicherungsmittel 26 am Ende des Kunststoffrohres 21 bzw. am Düsenkörper 24 sorgen für eine definierte Lage des Düsenkörpers relativ zum Kunststoffrohr. Das Kunststoffrohr 21 ragt auch auf der anderen Seite aus der Wischerwelle 13 heraus und hat dort einen Ringbund 27, der das Ende der Wischerwelle 13 passend umgreift. Dieser Ringbund 27 stützt sich an dem Getriebe 28 ab, über das die Wischerwelle 13 pendelnd antreibbar ist. Außerdem ist einstückig an das Kunststoffrohr 21 ein Anschlußstutzen 29 für einen Waschflüssigkeitsschlauch angeformt, der aus Platzgründen rechtwinklig vom Kunststoffrohr 21 absteht. Aus spritztechnischen Gründen ist das Rohr 21 auf beiden Seiten offen, wobei das der Düse gegenüberliegende Ende durch einen kugeligen Verschlußstopfen 30 abschließbar ist.

Die Wischerwelle 13 ragt in bekannter Weise aus einem Getriebegehäuse heraus, von dem ein Lagerauge 40 angedeutet ist. Dieses Getriebegehäuse wird durch einen Deckel 41 abgeschlossen, in den ein Durchbruch 42 eingearbeitet ist. Dieser Durchbruch 42 hat einen kreisförmigen Bereich 43, in den der Ringbund 27 am Kunststoffrohr 21 passend eingreift. Außerdem hat der Durchbruch 42 einen radial abstehenden rechteckigen Bereich 44, dessen Umriß größer ist als der Umriß des Anschlußstutzens 29. Folglich kann der Deckel 41 in Achsrichtung ohne jedes Verkanten auf das Getriebegehäuse aufgesetzt werden. Damit der Durchbruch 42 vollständig abgeschlossen ist, ist an dem Kunststoffrohr 21 ein radial abstehender Lappen 31 vorgesehen, der diesen rechteckigen Bereich 44 des Durchbruchs 42 abdeckt. Dabei dient der Ringbund 27 und der Rand des Lappens 31 zugleich als Anlagefläche für den Deckel 41.

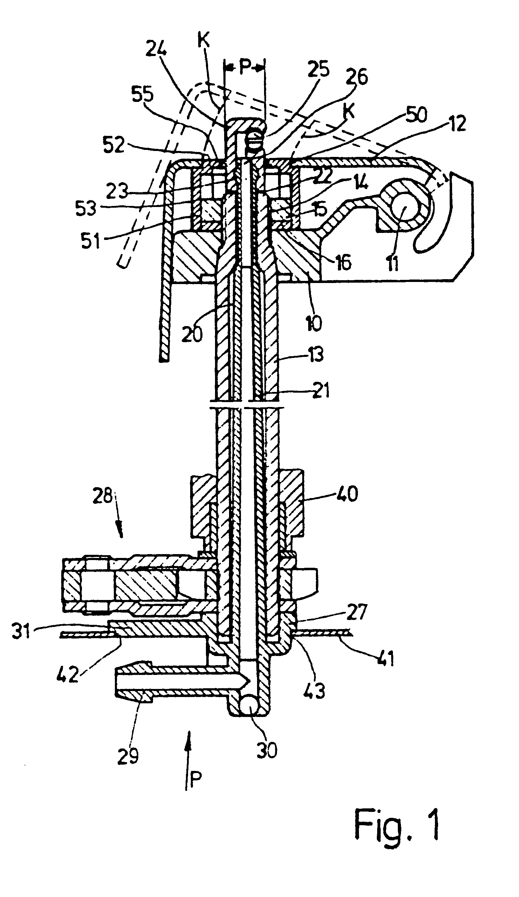

Für die Erfindung wesentlich ist, daß sich der Waschflüssigkeitskanal mit dem Kunststoffrohr 21 durch eine Bohrung 50 in der Abdeckkappe 12 hindurch erstreckt, so daß die Düse 25 in der Betriebsstellung der Abdeckkappe, die in Fig. 1 gezeigt ist, auf der dem Befestigungsteil 10 gegenüberliegenden Seite der Abdeckkappe 12 angeordnet ist. Gegenüber der Ausführung nach der DE-PS 31 02 538 ist damit der Abstand dieser Düse zu der zu reinigenden Scheibe entscheidend vergrößert, so daß der Waschflüssigkeitsstrahl in größerem Winkel auf die zu reinigende Scheibe auftrifft. Der Durchmesser der Bohrung 50 in der Abdeckkappe ist wesentlich größer als der Außendurchmesser D des Waschflüssigkeitskanals im Bereich dieser Bohrung 50, beim vorliegenden Ausführungsbeispiel also größer als der Durchmesser D des Düsenkörpers 24. Der Spalt zwischen dem Rand der Bohrung 50 in der Abdeckkappe 12 und dem Waschflüssigkeitskanal bzw. dem Düsenkörper 24 ist durch eine Zusatzkappe 51 abschließbar. Diese Zusatzkappe 51 ist topfförmig ausgebildet, wie Fig. 1 zeigt. In Achsrichtung gesehen erkennt man zwei Abschnitte mit unterschiedlichem Durchmesser, wobei der Durchmesser des kleineren Abschnitts 52 dem Durchmesser der Bohrung 50 entspricht. Die Höhe dieses Abschnitts 52 entspricht der Materialstärker der Abdeckkappe 12, so daß dieser Abschnitt 52 in der Ruhestellung der Abdeckkappe 12 passend in der Bohrung 50 sitzt, wobei sich die Außenfläche der Zusatzkappe bündig mit der Außenfläche der Abdeckwand der Abdeckkappe 12 abschließt. Der größere Abschnitt 53 bildet dabei eine Anlagefläche für die Abdeckkappe 12. Die topfförmige Zusatzkappe ist verdrehsicher über die Befestigungsmutter 15 gestülpt, so daß die Zusatzkappe insgesamt drehfest mit der Wischerwelle 13 verbunden ist. Die Zusatzkappe 51 ist ebenfalls aus Kunststoff hergestellt und mit dieser Befestigungsmutter 15 verrastet, also mittelbar an der Wischerwelle 13 gehalten. Die Zusatzkappe stützt sich auf dem Befestigungsteil 10 ab und deckt damit die Verbindung zwischen Wischerwelle und Befestigungsteil zusätzlich ab, so daß diese Stelle besonders gut geschützt ist.

Das Kunststoffrohr 21 ist ortsfest innerhalb der Wischerwelle 13 angeordnet. Die Zusatzkappe 51 dreht sich dagegen mit der Wischerwelle, so daß am Rand der Bohrung in der Zusatzkappe eine Relativbewegung zwischen dieser Zusatzkappe 51 und dem Düsenkörper 24 gegeben ist. Deshalb ist in diesem Bereich eine Dichtlippe 55 an der Zusatzkappe 51 vorgesehen.

In Fig. 1 ist gestrichelt eine Stellung der Abdeckkappe 12 angedeutet. Man erkennt an den gestrichelt eingezeichneten Kreisbögen K, daß der Durchmesser dieser Bohrung 50 derart gewählt ist, daß beim Abschwenken der Abdeckkappe 12 aus der Ruhestellung keine Berührung mit dem Düsenkörper 24 stattfinden kann. Die Lage der Zusatzkappe 51 wird dabei nicht verändert, da diese ja in Achsrichtung ortsfest gehalten ist.

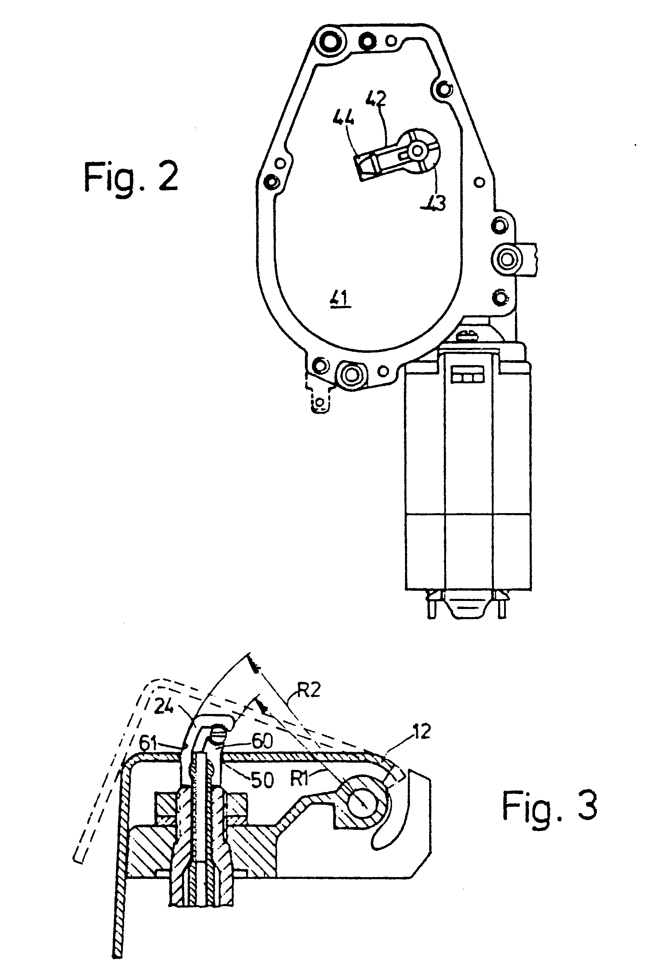

Insgesamt kann also zu dem Ausführungsbeispiel gemäß den Fig. 1 und 2 gesagt werden, daß die herkömmliche Konstruktion der Befestigung zwischen Wischarm und Wischerwelle im wesentlichen beibehalten ist und die Beweglichkeit der schwenkbaren Abdeckkappe nicht beeinträchtigt ist. Die Düse ist an einer optimalen Stelle angeordnet. Die Abdichtung der Verbindung zwischen Befestigungsteil und Wischerwelle ist in zweifacher Weise durch die Abdeckkappe und die Zusatzkappe gewährleistet. Der konstruktive Aufwand für diese Ausführung ist gering, weil spritztechnisch einfach aufgebaute Teile verwendet werden. Durch die Verwendung eines Kunststoffrohres vermeidet man eine Korrosion in der Bohrung der Wischerwelle. Damit ist eine funktionssicher arbeitende Scheibenwischeranlage mit guter Reinigungswirkung geschaffen.

In Fig. 3 ist ein weiteres Ausführungsbeispiel dargestellt, bei dem der Düsenkörper eine derart gekrümmte Kontur aufweist, daß eine Abdeckkappe 12 ohne Zusatzkappe verwendet werden kann. Die Mantelflächen 60 und 61 dieses Düsenkörpers 24 sind Kreisbögen mit Radien R1 und R2 zur Gelenkstelle 11. Folglich gleitet bei dieser Ausführung der Rand der Bohrung 50 in der Abdeckkappe 12 ohne Gefahr eines Verklemmens an diesen Mantelflächen 60 und 61 des Düsenkörpers entlang. Bei dieser Ausführungsform benötigt man jedoch für unterschiedliche Wischarme unterschiedliche Düsenkörper mit entsprechend gekrümmten Mantelflächen, während man bei der Ausführung nach Fig. 1 für alle Wischarmausführungen den gleichen Düsenkörper verwenden könnte. Deswegen wird der Ausführung nach Fig. 1 der Vorzug gegeben.

Abschließend soll noch darauf hingewiesen werden, daß in den Zeichnungen nur die bevorzugten Ausführungsbeispiele soweit dargestellt sind, daß die Grundgedanken der Erfindung verständlich werden. Natürlich könnte man auf ein Kunststoffrohr innerhalb der Wischerwelle verzichten, wenn man diese Wischerwelle aus einem rostfreien Material herstellt. Die Wischerwelle könnte dann selbst den Durchbruch in der Abdeckkappe durchsetzen. Außerdem könnte natürlich das Kunststoffrohr am wischarmseitigen Ende verlängert werden, so daß der Abstand der Düse weiter vergrößert wird und der Düsenkörper vollständig außerhalb der Abdeckkappe sitzt. Er könnte sich dann an der Deckfläche der Abdeckkappe abstützen und deren Ruhelage sichern. Allerdings müßte dann zum Abklappen der Abdeckkappe dieser Düsenkörper abgenommen werden, was möglichst vermieden werden sollte, damit nicht durch mehrfache Montage und Demontage Undichtigkeiten auftreten. In dem Düsenkörper könnten auch mehrere Düsen angeordnet sein und das Rohr könnte drehfest mit der Wischerwelle gekoppelt sein. Bei der in Fig. 1 gezeigten Ausführung wird das Kunststoffrohr von der Antriebsseite her in die Bohrung der Wischerwelle eingesetzt. Auch dies ist nicht unbedingt notwendig, doch handelt es sich dabei um eine sehr montagefreundliche Lösung.

## Patentansprüche

1. Scheibenwischeranlage, insbesondere für Kraftfahrzeuge, mit einem Wischarm mit einem an einer Wischerwelle (13) fixierbaren Befestigungsteil (10), an dem eine aus einer Betriebsstellung abklappbare Abdeckkappe (12) zur Abdeckung der Verbindung zwischen Wischerwelle (13) und Befestigungsteil (10) schwenkbar angelenkt ist, wobei innerhalb der Wischerwelle (13) ein zu einer Düse (25) führender Waschflüssigkeitskanal (21) verläuft, dadurch gekennzeichnet, daß in der Betriebsstellung der Abdeckkappe (12) sich der Waschflüssigkeitskanal (21) durch eine Bohrung (50) in der Abdeckkappe (12) hindurch erstreckt und die Düse (25) auf der dem Befestigungsteil (10) gegenüberliegenden Seite der Abdeckkappe (12) angeordnet ist.

2. Scheibenwischeranlage nach Anspruch 1, dadurch gekennzeichnet, daß die Bohrung (50) in der Abdeckkappe größer ist als der Außendurchmesser (D) des Waschflüssigkeitskanals (21, 24) im Bereich dieser Bohrung (50) und daß der Spalt zwischen dem Rand der Bohrung (50) in der Abdeckkappe (12) und dem Waschflüssigkeitskanal (21, 24) durch eine Zusatzkappe (51) abschließbar ist.

3. Scheibenwischeranlage nach Anspruch 2, dadurch gekennzeichnet, daß die Zusatzkappe (51) ortsfest mittelbar oder unmittelbar an der Wischerwelle (13) gehalten ist.

4. Scheibenwischeranlage nach Anspruch 3, dadurch gekennzeichnet, daß die Zusatzkappe (51) in Achsrichtung der Wischerwelle (13) derart fixiert ist, daß sie auf der zur Düse (25) gewandten Seite wenigstens annähernd bündig mit der Außenfläche der Abdeckkappe (12) abschließt.

5. Scheibenwischeranlage nach Anspruch 4, dadurch gekennzeichnet, daß die Zusatzkappe (51) drehfest mit der Wischerwelle (13) gekoppelt ist.

6. Scheibenwischeranlage nach Anspruch 5, dadurch gekennzeichnet, daß die Zusatzkappe (51) topfförmig ausgebildet ist und verdrehsicher über eine Befestigungsmutter (15) zwischen Befestigungsteil (10) und Wischerwelle (13) gestülpt ist.

7. Scheibenwischeranlage nach Anspruch 6, dadurch gekennzeichnet, daß die Zusatzkappe (51) in Achsrichtung gesehen zwei Abschnitte (52, 53) mit unterschiedlichem Durchmesser aufweist, wobei der Durchmesser des kleineren Abschnitts (52) dem Durchmesser der Bohrung (50) in der Abdeckkappe und die Höhe dieses Abschnitts (52) der Materialstärke der Abdeckkappe (12) entspricht, so daß dieser Abschnitt (52) in der Ruhestellung der Abdeckkappe (12) passend in der Bohrung (50) sitzt.

8. Scheibenwischeranlage nach einem der vorhergehenden Ansprüche, dadurch gekennzeichnet, daß der Waschflüssigkeitskanal (21) ortsfest angeordnet ist und der Rand eines Durchbruchs in der Zusatzkappe (51) als Dichtlippe (55) ausgebildet ist, die an dem Waschflüssigkeitskanal (21, 24) dichtend anliegt.

9. Scheibenwischeranlage nach Anspruch 8, dadurch gekennzeichnet, daß der Waschflüssigkeitskanal ein Rohr (21) vorzugsweise aus Kunststoff aufweist, das ortsfest in einer Bohrung (20) der Wischerwelle (13) angeordnet ist und über die Stirnfläche (22) der Wischerwelle (13) hervorsteht und daß auf dem Ende dieses Rohres (21) ein Düsenkörper (24) mit einer Düse (25) aufgerastet ist, der sich auf der Stirnfläche (22) der Wischerwelle abstützt.

10. Scheibenwischeranlage nach Anspruch 9, dadurch gekennzeichnet, daß das Rohr (21) auf der anderen Seite aus der Bohrung (20) der Wischerwelle (13) herausragt und dort vorzugsweise einstückig einen Ringbund (27) aufweist, der das Ende der Wischerwelle (13) passend umgreift.

11. Scheibenwischeranlage nach Anspruch 10, dadurch gekennzeichnet, daß von dem Rohr (21) vorzugsweise rechtwinklig ein Anschlußstutzen (29) absteht und das freie Rohrende durch einen Verschlußstopfen (30) abschließbar ist.

12. Scheibenwischeranlage nach einem der vorhergehenden Ansprüche, dadurch gekennzeichnet, daß die Wischerwelle (13) aus einem Getriebgehäuse herausragt, das durch einen Deckel (41) abgeschlossen ist, der einen Durchbruch (42) mit einem kreisförmigen Bereich (43) aufweist, in den der Ringbund (27) passend eingreift.

13. Scheibenwischeranlage nach Anspruch 12, dadurch gekennzeichnet, daß der Durchbruch (42) einen radial abstehenden rechteckigen Bereich (44) aufweist, dessen Umriß größer ist als der Umriß des Anschlußstutzens (29).

14. Scheibenwischeranlage nach Anspruch 13, dadurch gekennzeichnet, daß das Rohr (21) einstückig einen radial abstehenden Lappen (31) aufweist, der den rechteckigen Bereich (44) des Durchbruchs (42) im Deckel (41) abschließt.

15. Scheibenwischeranlage nach Anspruch 1, dadurch gekennzeichnet, daß der Waschflüssigkeitskanal (21) bzw. der Düsenkörper (24) in dem über die Abdeckkappe vorstehenden Bereich kreisförmige Mantelflächen (60, 61) aufweist, deren Mittelpunkte mit der Gelenkstelle (11) zwischen der Abdeckkappe (12) und dem Befestigungsteil (10) übereinstimmen, und daß der Durchmesser der Bohrung (50) in der Abdeckkappe (12) dem Außendurchmesser des Waschflüssigkeitskanals (21) bzw. des Düsenkörpers (24) entspricht.

**Claims**

1. A windscreen wiper system, especially for motor vehicles, comprising a wiper arm with a fastening member (10) which may be fixed onto a wiper shaft (13), onto which fastening member is swivellably articulated a cap (12) which covers the connection between wiper shaft (13) and fastening member (10) and may be tilted from an operating position, wherein a washing liquid channel (21) conducting to a nozzle extends within the wiper shaft, characterized in that in the operating position of the cap (12) the washing liquid channel (21) extends through a bore (50) in the cap (12) and that the nozzle (25) is arranged on that side of the cap (12) which is opposite the fastening member (10).

2. A windscreen wiper system according to claim 1, characterized in that the bore (50) in the cap is larger than the outside diameter (D) of the washing liquid channel (21, 24) in the area of this bore (50) and that the gap between the rim of the bore (50) in the cap (12) and the washing liquid channel (21, 24) may be closed by an additional cap (51).

3. A windscreen wiper system according to claim 2, characterized in that the additional cap (51) is stationarily directly or indirectly held on the wiper shaft (13).

4. A windscreen wiper system according to claim 3, characterized in that in the axial direction of the wiper shaft (13) the additional cap (51) is fixed in such a way that at the side facing the nozzle (25) it is at least substantially flush with the external surface of the cap (12).

5. A windscreen wiper system according to claim 4, characterized in that the additional cap (51) is coupled with the wiper shaft (13) in a manner protected against twisting.

6. A windscreen wiper system according to claim 5, characterized in that the additional cap (51) is cup-shaped and in a manner protected against twisting slipped on a fastening nut (15) between fastening member (10) and wiper shaft (13).

7. A windscreen wiper system according to claim 6, characterized in that, seen in the axial direction, the additional cap has two portions (52, 53) with different diameters, wherein the diameter of the smaller portion (52) corresponds to the diameter of the bore (50) in the cap and the height of this portion (52) corresponds to the thickness of the cap (12), so that in the rest position this portion (52) is fittingly seated in the bore (50).

8. A windscreen wiper system according to one of the preceding claims, characterized in that the washing liquid channel (21) is stationarily arranged and the rim of an aperture in the additional cap (51) is formed as a sealing lip (55) which sealingly rests against the washing liquid channel (21, 24).

9. A windscreen wiper system according to claim 8, characterized in that the washing liquid channel includes a pipe (21), preferably of plastic material, which is stationarily arranged in a bore (20) of the wiper shaft (13) and protrudes over the front face (22) of the wiper shaft (13) and that upon the end of this pipe (21) a nozzle body (24) of a nozzle (25) is locked, which nozzle body is supported on the front face (22) of the wiper shaft.

10. A windscreen wiper system according to claim 9, characterized in that the pipe (21) protrudes from the bore (20) of the wiper shaft (13) on the other side and there includes a preferably integral annular collar (27) which fittingly encompasses the end of the wiper shaft (13).

11. A windscreen wiper system according to claim 10, characterized in that from the pipe (21) protrudes a pipe union (29) preferably rectangularly and the free end of the pipe may be closed by a plug (30).

12. A windscreen wiper system according to one of the preceding claims, characterized in that the wiper shaft (13) protrudes from a gear housing which is closed by a cover (41) having an aperture (42) with a circular area (43) into which the annular collar (27) fittingly engages.

13. A windscreen wiper system according to claim 12, characterized in that the aperture (42) has a radially projecting rectangular area (44) the contour of which is larger than the contour of the pipe union (29).

14. A windscreen wiper system according to claim 13, characterized in that the pipe integrally includes a radially projecting lug (31) which closes the rectangular area (44) of the aperture (42) in the cover (41).

15. A windscreen wiper system according to claim 1, characterized in that the washing liquid channel (21) or the nozzle body (24) have circular generated surfaces (60, 61) in the area projecting over the cap, the centres of which generated surfaces coincide with the moving joint (11) between the cap (12) and the fastening member (10), and that the diameter of the bore (50) in the cap (12) corresponds to the outside diameter of the washing liquid channel (21) or of the nozzle body (24).

**Revendications**

1. Système d'essuie-glace, en particulier pour véhicules automobiles, comprenant un bras d'essuie-glace avec une pièce de fixation (10) qui peut être fixée à un arbre d'essuie-glace (13) et sur laquelle un capot protecteur (12) rabattable depuis une position de fonctionnement est monté pivotant pour recouvrir la liaison entre l'arbre d'essuie-glace (13) et la pièce de fixation (10), un canal de liquide de lavage (21) conduisant à une buse (25) s'étendant à l'intérieur de l'arbre d'essuie-glace (13), caractérisé en ce que, lorsque le capot protecteur (12) est en position de fonctionnement, le canal de liquide de lavage (21) s'étend à travers un perçage (50) pratiqué dans le capot protecteur (12) et en ce que la buse (25) est disposée du côté du capot protecteur (12) opposé à la pièce de fixation (10).

2. Système d'essuie-glace conforme à la revendication 1, caractérisé en ce que le perçage (50) réalisé dans le capot protecteur est plus grand que le diamètre extérieur (D) du canal de liquide de lavage (21, 24) dans la zone de ce perçage (50), et en ce que l'interstice formé entre le bord du perçage (50) du capot protecteur (12) et la canal de liquide de lavage (21, 24) peut être fermé par un capot supplémentaire (51).

3. Système d'essuie-glace conforme à la revendication 2, caractérisé en ce que le capot supplémentaire (51) est maintenu fixé, indirectement ou directement, sur l'arbre d'essuie-glace (13).

4. Système d'essuie-glace conforme à la revendication 3, caractérisé en ce que le capot supplémentaire (51) est fixé dans le sens axial de l'arbre d'essuie-glace (13) de façon que, du côté tourné vers la buse (25), il se ferme au moins de manière sensiblement jointive avec la surface extérieure du capot protecteur (12).

5. Système d'essuie-glace conforme à la revendication 4, caractérisé en ce que le capot supplémentaire (51) est lié en rotation avec l'arbre d'essuie-glace (13).

6. Système d'essuie-glace conforme à la revendication 5, caractérisé en ce que le capot supplémentaire (51) est réalisé en forme de pot et est emmanché de manière protégée contre des rotations sur un écrou de fixation (15) entre la pièce de fixation (10) et l'arbre d'essuie-glace (13).

7. Système d'essuie-glace conforme à la revendication 5, caractérisé en ce que, dans le sens axial, le capot supplémentaire (51) comprend deux portions (52, 53) de diamètres différents, le diamètre de la petite portion (52) correspondant au diamètre du perçage (50) du capot protecteur et la hauteur de cette portion (52) correspondant à l'épaisseur de matériau du capot protecteur (12), de sorte que la portion (52) s'adapte dans le perçage (50) lorsque le capot protecteur (12) est en position de repos.

8. Système d'essuie-glace conforme à l'une des revendications précédentes, caractérisé en ce que le canal de liquide de lavage (21) est monté fixe et en ce que le bord d'une ouverture pratiquée dans le capot supplémentaire (51) est conçu sous la forme d'une lèvre d'étanchéité (55) qui est appliquée de manière étanche contre le canal de liquide de lavage (21, 24).

9. Système d'essuie-glace conforme à la revendication 8, caractérisé en ce que le canal de liquide de lavage comporte un tube (21) de préférence en matière plastique qui est monté de manière fixe dans un perçage (20) de l'arbre d'essuie-glace (13) et qui dépasse de la face avant (22) de l'arbre d'essuie-glace (13), et en ce qu'à l'extrémité de ce tube (21) est encliqueté un corps de buse (24) qui est muni d'une buse (25) et qui prend appui sur la face avant (22) de l'arbre d'essuie-glace.

10. Système d'essuie-glace conforme à la revendication 9, caractérisé en ce que le tube (21) dépasse de l'autre côté du perçage (20) de l'arbre d'essuie-glace 8139 et comporte, à cet endroit, une collerette annulaire (27) de préférence venue de matière qui s'adapte autour de l'extrémité de l'arbre d'essuie-glace (13).

11. Système d'essuie-glace conforme à la revendication 10, caractérisé en ce qu'un manchon de raccordement (29) dépasse du tube (21), de préférence à angle droit, et en ce que l'extrémité libre du tube peut être fermée par un bouchon (30).

12. Système d'essuie-glace conforme à l'une quelconque des revendications précédentes, caractérisé en ce que l'arbre d'essuie-glace (13) dépasse d'un boîtier de mécanisme fermé par un couvercle (41) qui comporte une ouverture (42) présentant une zone circulaire (43) dans laquelle s'adapte la collerette annulaire (27).

13. Système d'essuie-glace conforme à la revendication 12, caractérisé en ce que l'ouverture (42) comporte une zone rectangulaire faisant saillie radialement (44) dont le contour est plus grand que celui du manchon de raccordement (29).

14. Système d'essuie-glace conforme à la revendication 13, caractérisé en ce que le tube (21) est réalisé d'une seule pièce avec une languette faisant saillie radialement (31) qui ferme la zone rectangulaire (44) de l'ouverture (42) du couvercle (41).

15. Système d'essuie-glace conforme à la revendication 1, caractérisé en ce que le canal de liquide de lavage (21) et, respectivement, le corps de buse (24) comportent, dans la zone dépassant du capot protecteur, des surfaces extérieures courbes (60, 61) dont les centres coïcident avec le point d'articulation (11) entre le capot protecteur (12) et la pièce de fixation (10), et en ce que le diamètre du perçage (50) du capot protecteur (12) correspond au diamètre extérieur du canal de liquide de lavage (21) et, respectivement, du corps de buse (24).

Fig. 1

Fig. 2

Fig. 3